# EUROPEAN PATENT APPLICATION

(11) **EP 4 625 959 A1**
(43) Date of publication of application: **01.10.2025**
(21) Application number: 24196680.3
(22) Date of filing: 27.08.2024
(51) Int. Cl.: H04N 1/00, G06F 3/12, G06F 11/07

(54) **INFORMATION PROCESSING SYSTEM**

(30) Priority: 26.03.2024 JP 2024050329
(71) Applicant: FUJIFILM Business Innovation Corp., Minato-ku Tokyo (JP)
(72) Inventor: MIYAMORI, Shinya, Yokohama-shi, Kanagawa (JP); OKI, Tomoya, Yokohama-shi, Kanagawa (JP)
(74) Representative: Kurig, Thomas

(57) **Abstract**

An information processing system includes: a processor configured to: specify a candidate for an action to be performed on an image forming apparatus that forms an image on a recording medium; and generate information for notifying a notification target person of replacement-unrequired action information that is information on a replacement-unrequired action which is an action not accompanied by replacement of a component with higher priority than replacement-required action information which is information on a replacement-required action which is an action accompanied by replacement of the component, among specified candidates for the action.

## Description

### BACKGROUND OF THE INVENTION

### (i) Field of the Invention

The present invention relates to an information processing system.

### (ii) Description of Related Art

JP2016-180873A discloses a process of performing test printing in an image forming apparatus, scanning test printing paper and generating diagnosis image data, transmitting the diagnosis image data to a maintenance apparatus, generating a unique identification code in the maintenance apparatus and associating the unique identification code with the diagnosis image data, and transmitting the identification code to the image forming apparatus to notify a user.

JP2014-219624A discloses a process of determining whether or not a quality of an image formed on paper after attachment and detachment of a component or a unit of an image forming apparatus is improved, by using scan data of the image formed on the paper after the attachment and detachment of the component or the unit.

JP2019-174758A discloses a failure diagnosis apparatus that detects a failure location, which is a constituent component in which an abnormality occurs, among constituent components of an image forming apparatus, from image data obtained by scanning an image formed by the image forming apparatus.

### SUMMARY OF THE INVENTION

In a case where a defect occurs in the image forming apparatus, the defect can be resolved by performing an action on the image forming apparatus.

Here, in a case where an action accompanied by replacement of the component is performed as the action for the image forming apparatus, a cost required for the action is likely to be high as compared with a case where the action not accompanied by the replacement of the component is performed.

An object of the present invention is to reduce performing an action accompanied by replacement of a component, as compared with a configuration in which a notification target person is notified of only the action accompanied by the replacement of the component as a candidate for an action to be performed on an image forming apparatus, or a diagnosis is likely to be performed under an incorrect condition without notifying the notification target person of information on the diagnosis of the image forming apparatus.

According to a first aspect of the present invention, there is provided an information processing system including: a processor configured to: specify a candidate for an action to be performed on an image forming apparatus that forms an image on a recording medium; and generate information for notifying a notification target person of replacement-unrequired action information that is information on a replacement-unrequired action which is an action not accompanied by replacement of a component with higher priority than replacement-required action information which is information on a replacement-required action which is an action accompanied by replacement of the component, among specified candidates for the action.

According to a second aspect of the present invention, in the information processing system according to the first aspect, the processor may be configured to: generate information for notifying the notification target person of the replacement-required action information after the notification target person is notified of the replacement-unrequired action information.

According to a third aspect of the present invention, in the information processing system according to the second aspect, the processor may be configured to: generate information for notifying the notification target person of the replacement-required action information after the notification target person is notified of the replacement-unrequired action information and an operator actually performs the replacement-unrequired action.

According to a fourth aspect of the present invention, in the information processing system according to the first aspect, the processor may be configured to: as the information for notifying the notification target person of the replacement-unrequired action information with higher priority than the replacement-required action information, generate information for causing a display device to display a screen in which both the replacement-unrequired action information and the replacement-required action information are displayed in a manner in which both the replacement-unrequired action information and the replacement-required action information are displayed and the replacement-unrequired action information is more easily recognized by the notification target person than the replacement-required action information.

According to a fifth aspect of the present invention, in the information processing system according to the fourth aspect, the processor may be configured to: as the information for causing the display device to display the screen in which both the replacement-unrequired action information and the replacement-required action information are displayed in the manner in which the replacement-unrequired action information is more easily recognized by the notification target person than the replacement-required action information, generate information for causing the display device to display a screen in which the replacement-unrequired action information is displayed at a higher position than the replacement-required action information.

According to a sixth aspect of the present invention, in the information processing system according to the fourth aspect, the processor may be configured to: as the information for causing the display device to display the screen in which both the replacement-unrequired action information and the replacement-required action information are displayed in the manner in which the replacement-unrequired action information is more easily recognized by the notification target person than the replacement-required action information, generate information for causing the display device to display a screen in which the replacement-unrequired action information is displayed larger than the replacement-required action information.

According to a seventh aspect of the present invention, in the information processing system according to any one of the first aspect to the sixth aspect, the processor may be configured to: further generate a common screen in which check information indicating whether or not the replacement-unrequired action specified by the replacement-unrequired action information notified to the notification target person is actually performed, and execution information indicating that the replacement-required action specified by the replacement-required action information notified to the notification target person is actually performed are described.

According to an eighth aspect of the present invention, in the information processing system according to the seventh aspect, the processor may be configured to: further generate the common screen in which information on a necessity of the actually performed replacement-required action is described, in addition to the check information and the execution information.

According to a ninth aspect of the present invention, in the information processing system according to the eighth aspect, the processor may be configured to: in a case where the replacement-unrequired action specified by the replacement-unrequired action information notified to the notification target person is actually performed and then the replacement-required action specified by the replacement-required action information notified to the notification target person is actually performed, generate the common screen in which information indicating that the replacement-required action is a necessary action is further described, in addition to the check information and the execution information.

According to a tenth aspect of the present invention, there is provided an information processing system including: a processor configured to: acquire condition information that is information on a condition under which an image forming apparatus that forms an image on a recording medium forms a diagnosis image that is an image for diagnosis; and generate information for notifying a notification target person of the condition information.

According to an eleventh aspect of the present invention, in the information processing system according to the tenth aspect, the processor may be configured to: in a case where the condition specified by the condition information does not satisfy a predetermined condition, generate the information for notifying the notification target person of the condition information.

According to a twelfth aspect of the present invention, in the information processing system according to the tenth aspect or the eleventh aspect, the processor may be configured to: in a case where the condition specified by the condition information does not satisfy a predetermined condition, further generate information for further notifying the notification target person of information indicating that the condition specified by the condition information does not satisfy the predetermined condition based on a criterion.

According to a thirteenth aspect of the present invention, in the information processing system according to any one of the tenth aspect to the twelfth aspect, the processor may be configured to: in a case where the condition specified by the condition information does not satisfy a predetermined condition, further generate information for notifying the notification target person of information indicating that there is a probability that an action, which is specified based on the diagnosis on the image forming apparatus and performed on the image forming apparatus, does not function effectively.

According to a fourteenth aspect of the present invention, in the information processing system according to any one of the tenth aspect to the thirteenth aspect, the processor may be configured to: in a case where the condition specified by the condition information does not satisfy a predetermined condition as a criterion, further generate information for notifying the notification target person of information on the predetermined condition.

According to a fifteenth aspect of the present invention, in the information processing system according to any one of the tenth aspect to the fourteenth aspect, the processor may be configured to: further generate a common screen including a result of diagnosis on the image forming apparatus based on the diagnosis image formed by the image forming apparatus under the condition specified by the condition information and the condition information.

According to a sixteenth aspect of the present invention, in the information processing system according to the fifteenth aspect, the processor may be configured to: generate the common screen in which both of the result of the diagnosis on the image forming apparatus based on the diagnosis image formed by the image forming apparatus under the condition specified by the condition information and the condition information are described, and in a case where the image forming apparatus forms the diagnosis image a plurality of times by shifting a time, generate the common screen in which the result of the diagnosis for each of the diagnosis images formed the plurality of times and the condition information corresponding to the result of the diagnosis are described.

With the first aspect of the present invention, it is possible to reduce performing an action accompanied by replacement of a component, as compared with a configuration in which the notification target person is notified of only the action accompanied by the replacement of the component as a candidate for an action to be performed on the image forming apparatus.

With the second aspect of the present invention, it is possible to reduce performing the action accompanied by the replacement of the component, as compared with a case where information for notifying the notification target person of the replacement-required action information before the notification target person is notified of the replacement-unrequired action information is generated.

With the third aspect of the present invention, it is possible to reduce performing the replacement-required action even though there is a probability that a defect is resolved by the replacement-unrequired action by an operator, as compared with a case where the information for notifying the notification target person of the replacement-required action information before the replacement-unrequired action by the operator is actually performed is generated.

With the fourth aspect of the present invention, it is possible to reduce performing the action accompanied by the replacement of the component, as compared with a case where information for causing the display device to display a screen in which both the replacement-unrequired action information and the replacement-required action information are displayed in a manner in which the replacement-required action information is easily recognized by the notification target person than the replacement-unrequired action information is generated.

With the fifth aspect of the present invention, it is possible to reduce performing the action accompanied by the replacement of the component, as compared with a case where information for causing the display device to display a screen in which the replacement-unrequired action information is displayed at a lower position than the replacement-required action information is generated.

With the sixth aspect of the present invention, it is possible to reduce performing the action accompanied by the replacement of the component, as compared with a case where information for causing the display device to display a screen in which the replacement-unrequired action information is displayed smaller than the replacement-required action information is generated.

With the seventh aspect of the present invention, it is possible to check whether or not the replacement-unrequired action is performed after the replacement-required action is actually performed, by referring to the screen.

With the eighth aspect of the present invention, a person who refers to this screen can more easily determine a necessity of the replacement-required action, as compared with a case where the information on the necessity of the replacement-required action is not included in the screen.

With the ninth aspect of the present invention, the person who refers to this screen can more easily determine the necessity of the replacement-required action, as compared with a case where the information indicating that the replacement-required action is a necessary action is not included in the screen.

With the tenth aspect of the present invention, it is possible to reduce performing the action accompanied by the replacement of the component, as compared with a configuration in which the diagnosis is likely to be performed under an incorrect condition without notifying the notification target person of the information on the diagnosis of the image forming apparatus.

With the eleventh aspect of the present invention, in a case where the condition specified by the condition information does not satisfy the predetermined condition, the notification target person can be notified of the condition information.

With the twelfth aspect of the present invention, the information indicating that the condition specified by the condition information does not satisfy the predetermined condition as a criterion can be provided to the notification target person.

With the thirteenth aspect of the present invention, the information indicating that the action may not function effectively even though the action is performed on the image forming apparatus can be provided to the notification target person.

With the fourteenth aspect of the present invention, it is possible to notify the notification target person of the predetermined condition.

With the fifteenth aspect of the present invention, it is possible to provide the screen in which a relationship between the result of the diagnosis on the image forming apparatus and the condition information is easily specified, as compared with a case where the result of the diagnosis of the image forming apparatus and the condition information are respectively displayed on separate screens.

With the sixteenth aspect of the present invention, it is possible to provide the screen in which a relationship between the result of the diagnosis result obtained in a case where the image forming apparatus forms the diagnosis image a plurality of times by shifting a time and the condition information corresponding to the result of the diagnosis is easily specified, as compared with a case where the result of the diagnosis of the image forming apparatus and the condition information are respectively displayed on separate screens.

### BRIEF DESCRIPTION OF THE DRAWINGS

Exemplary embodiment(s) of the present invention will be described in detail based on the following figures, wherein:
Fig. 1 is a diagram illustrating an example of a diagnosis system;
Fig. 2 is a diagram illustrating a hardware configuration example of a server apparatus and an information processing unit provided in an image forming apparatus;
Fig. 3 is a diagram describing the image forming apparatus;
Fig. 4 is a diagram illustrating an example of a screen generated by a CPU of the server apparatus in a case of notifying a user of the image forming apparatus of a diagnosis result and a candidate for an action;
Fig. 5 is a diagram illustrating the screen generated by the server apparatus;
Fig. 6 is a diagram illustrating a screen that is referred to by a maintenance person;
Fig. 7 is a diagram illustrating another example of the screen generated by the CPU of the server apparatus;
Fig. 8 is a diagram illustrating another example of the screen that is referred to by the user of the image forming apparatus after the diagnosis of the image forming apparatus;
Fig. 9 is a diagram illustrating still another example of the screen that is referred to by the user of the image forming apparatus after the diagnosis of the image forming apparatus;
Fig. 10 is a diagram illustrating the screen generated by the CPU of the server apparatus;
Fig. 11 is a diagram illustrating another example of the screen that is referred to by the maintenance person;
Fig. 12 is a diagram illustrating a screen displayed on an operation reception unit of the image forming apparatus;
Fig. 13 is a diagram illustrating a screen in which a result of diagnosis performed based on a diagnosis image formed under condition information is displayed; and
Fig. 14 is a diagram illustrating still another example of the screen generated by the CPU of the server apparatus.

### DETAILED DESCRIPTION OF THE INVENTION

Hereinafter, an exemplary embodiment of the present disclosure will be described with reference to the accompanying drawings.

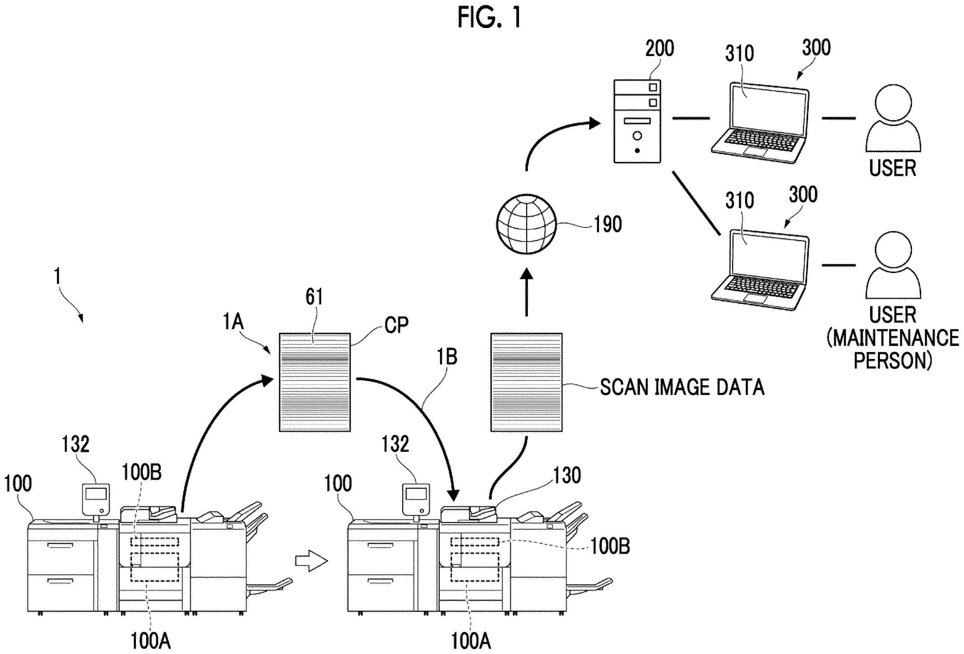

Fig. 1 is a diagram illustrating an example of a diagnosis system 1.

The diagnosis system 1 according to the present exemplary embodiment is provided with a plurality of image forming apparatuses 100 and a server apparatus 200 that is connected to each of the plurality of image forming apparatuses 100 via a communication line 190.

In Fig. 1, two image forming apparatuses 100 among the plurality of image forming apparatuses 100 are displayed.

In the present exemplary embodiment, in the server apparatus 200 as an example of an information processing system, diagnosis of each image forming apparatus 100 is performed.

The diagnosis system 1 further includes a user terminal 300. The user terminal 300 is connected to the server apparatus 200. The user terminal 300 receives an operation from a user.

In the present exemplary embodiment, the user terminal 300 is provided in a manner corresponding to each of a plurality of users, and a plurality of user terminals 300 are provided.

Examples of the user include a user of the image forming apparatus 100 or a maintenance person of the image forming apparatus 100. In the present exemplary embodiment, the user terminal 300 that is referred to by the user or the maintenance person is provided.

The user terminal 300 is provided with a display device 310. The user terminal 300 is realized by a computer. Examples of a form of the user terminal 300 include a personal computer (PC), a smartphone, and a tablet terminal.

The image forming apparatus 100 is provided with an image forming unit 100A as an example of an image forming section that forms an image on paper which is an example of a recording medium.

The image forming apparatus 100 is further provided with an information processing unit 100B. The information processing unit 100B executes various processes executed in the image forming apparatus 100.

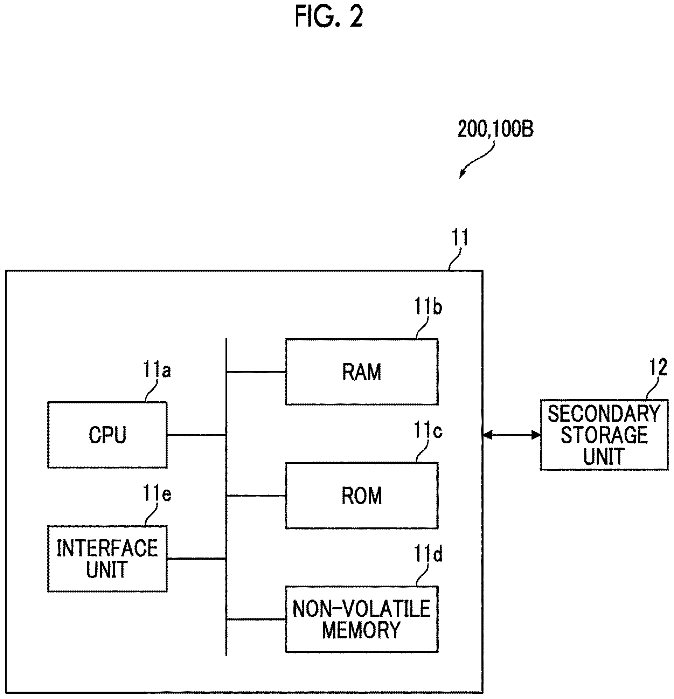

Fig. 2 is a diagram illustrating a configuration example of hardware of the server apparatus 200 and the information processing unit 100B provided in the image forming apparatus 100. The server apparatus 200 and the information processing unit 100B provided in the image forming apparatus 100 are realized by a computer.

Each of the server apparatus 200 and the information processing unit 100B includes an arithmetic processing unit 11 that executes a digital arithmetic process according to a program, and a secondary storage unit 12 that stores information.

The secondary storage unit 12 is realized, for example, by a known information storage device such as a hard disk drive (HDD), a semiconductor memory, or a magnetic tape.

The arithmetic processing unit 11 is provided with a CPU 11a as an example of a processor.

In addition, the arithmetic processing unit 11 is provided with a RAM 11b used as a working memory or the like of the CPU 11a and a ROM 11c in which programs or the like executed by the CPU 11a are stored.

In addition, the arithmetic processing unit 11 is provided with a non-volatile memory 11d that is configured to be rewritable and can hold data even in a case where power supply is interrupted and an interface unit 11e that controls each unit, such as a communication unit, connected to the arithmetic processing unit 11.

The non-volatile memory 11d is configured with, for example, an SRAM or a flash memory that is backed up by a battery. The secondary storage unit 12 stores the programs executed by the arithmetic processing unit 11 in addition to files and the like.

In the present exemplary embodiment, the CPU 11a reads the program stored in the ROM 11c or the secondary storage unit 12 to execute each process.

The program executed by the CPU 11a can be provided to the server apparatus 200 and the information processing unit 100B in a state in which the program is stored in a computer-readable recording medium such as a magnetic recording medium (for example, a magnetic tape or a magnetic disk), an optical recording medium (for example, an optical disk), a magnetooptical recording medium, or a semiconductor memory. Further, the program executed by the CPU 11a may be provided to the server apparatus 200 and the information processing unit 100B by a communication section such as the Internet.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

The process executed by the image forming apparatus 100 among the processes described below is executed by the CPU 11a as an example of the processor provided in the image forming apparatus 100. The process executed by the server apparatus 200 among the processes described below is executed by the CPU 11a as an example of the processor provided in the server apparatus 200.

Further, the process related to diagnosis on the image forming apparatus 100 among the processes described below is executed by the server apparatus 200 as an example of an information processing system. The information processing system that performs the process related to the diagnosis on the image forming apparatus 100 may be realized by one apparatus such as one server apparatus 200 or may be realized by a plurality of apparatuses.

The "information processing system" in the present exemplary embodiment is configured with a single apparatus as an example, and may be configured with a plurality of apparatuses.

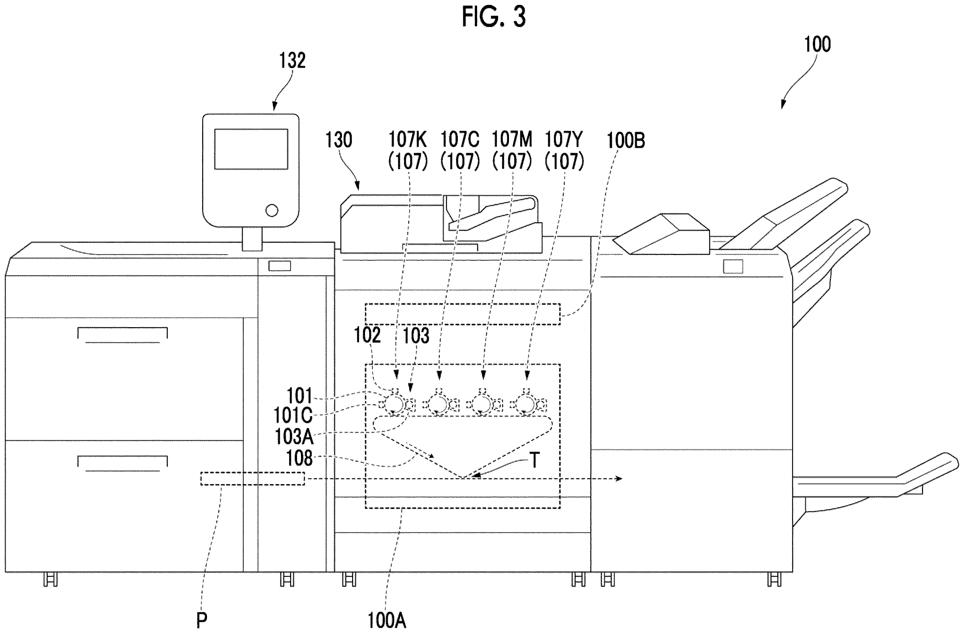

Fig. 3 is a diagram describing the image forming apparatus 100.

In the present exemplary embodiment, as described above, the image forming apparatus 100 is provided with the image forming unit 100A that forms an image on paper P which is an example of a recording medium.

The image formation on the paper P by the image forming unit 100A is performed by using an electrophotographic method.

The image forming unit 100A is provided with an intermediate transfer belt 108 as a member that moves in a circumferential direction, and a plurality of image forming units 107 that form images on the intermediate transfer belt 108.

The plurality of image forming units 107 form the images of colors different from each other on the intermediate transfer belt 108.

In the present exemplary embodiment, as the plurality of image forming units 107, an image forming unit 107Y that forms an image of yellow, an image forming unit 107M that forms an image of magenta, an image forming unit 107C that forms an image of cyan, and an image forming unit 107K that forms an image of black are provided.

The image formed by each of the image forming units 107 is transferred to the intermediate transfer belt 108 as an example of a transfer member. Thereafter, at a transfer unit T, this image is transferred to the paper P, which is transported to the transfer unit T. Therefore, an image is formed on the paper P.

A photosensitive drum 101 as an example of an image holding body is provided in each of the image forming units 107. The photosensitive drum 101 is rotated in a clockwise direction.

Further, in each of the image forming units 107, a charging device 101C that performs charging on the photosensitive drum 101 and an exposure device 102 that performs exposing on the photosensitive drum 101 are provided.

Further, a developing device 103 that performs development on an electrostatic latent image formed on the photosensitive drum 101 by the exposure by the exposure device 102 is provided in the image forming unit 107.

The developing device 103 is provided with a developing roll 103A disposed at a position facing the photosensitive drum 101. In the present exemplary embodiment, development is performed by a developer adhering to an outer peripheral surface of the developing roll 103A moving to a surface of the photosensitive drum 101.

In a case where the development is performed, an image by, for example, a toner is formed on the photosensitive drum 101. Thereafter, this image is transferred to an outer circumferential surface of the intermediate transfer belt 108. Thereafter, in the present exemplary embodiment, this image on the intermediate transfer belt 108 is transferred to the paper P, and the image is formed on the paper P.

The formation of the image on the paper P by the image forming unit 100A is not limited to the electrophotographic method, and other methods such as an inkjet method may be used.

The image forming apparatus 100 is further provided with an image scanning device 130 as an example of an image scanning section that scans an image formed on paper (not illustrated) that is an example of a recording medium. Such an image scanning device 130 is a so-called scanner having a function of transporting the paper.

The image scanning device 130 includes a light source that emits light with which paper is to be irradiated and a light receiving unit such as a CCD that receives reflected light from the paper. In the present exemplary embodiment, scan image data described below is generated based on the reflected light received by the light receiving unit.

A scanning position of an image is set in advance in the image scanning device 130, and the image scanning device 130 scans an image at a portion of paper that is sequentially transported, which is located at the scanning position.

In addition, the image forming apparatus 100 has an information transmission function to transmit information to the server apparatus 200 (see Fig. 1).

In the example illustrated in Fig. 3, the image scanning device 130 is provided at an upper portion of the image forming apparatus 100. The image scanning device 130 sequentially scans the paper set by the user.

An installation mode of the image scanning device 130 is not limited to the mode illustrated in Fig. 3. The image scanning device 130 may be provided inside the image forming apparatus 100 and on a transport path of the paper P.

In this case, the paper P on which an image is formed by the image forming unit 100A sequentially passes through the image scanning device 130, and at the time of passing through the paper P, each image of the paper P is scanned in order.

In the present exemplary embodiment, the image scanning device 130 is provided with a paper reversing mechanism such that the paper can be supplied after the front and back sides are reversed with respect to the scanning position of the image.

Therefore, in the present exemplary embodiment, the scanned paper on which the image is formed on one surface is reversed and can be supplied to the scanning position again. Therefore, the image on the front surface and the image on the back surface of the paper can be scanned.

In addition, in scanning an image on paper, the paper may be placed on a document stand (not illustrated) configured with plate-shaped glass or the like such that the paper placed on the document stand may be scanned.

Further, an operation reception unit 132 that receives an operation from a user who uses the image forming apparatus 100 is provided in each of the image forming apparatuses 100.

The operation reception unit 132 is configured with a so-called touch panel. The operation reception unit 132 displays information to the user, and receives the operation performed by the user.

The display of the information to the user and the reception of the operation of the user are not limited to being performed by one operation reception unit 132 as in the present exemplary embodiment, and the operation reception unit 132 and an information display unit may be individually provided.

In the present exemplary embodiment, in a case where the image forming apparatus 100 (see Fig. 1) is diagnosed, first, the image forming unit 100A is operated to form a diagnosis image 61 on the paper P. Therefore, as indicated by a reference numeral 1A, diagnosis paper CP which is the paper P on which the diagnosis image 61 is formed is generated.

The diagnosis image 61 is an image to be used to diagnose the image forming apparatus 100. In the present exemplary embodiment, the diagnosis paper CP which is the paper P on which the diagnosis image 61 to be used for the diagnosis is formed is generated.

In a case where the diagnosis paper CP is generated, as indicated by a reference numeral 1B in Fig. 1, the diagnosis paper CP is placed in the image scanning device 130. The image scanning device 130 is used to scan the diagnosis paper CP on which the diagnosis image 61 is formed.

Therefore, scan image data obtained by scanning the diagnosis paper CP is generated.

In the present exemplary embodiment, the scan image data is transmitted to the server apparatus 200, and then is stored in the server apparatus 200. The server apparatus 200 diagnoses the image forming apparatus 100 based on the scan image data.

In the present exemplary embodiment, the user or the maintenance person of the image forming apparatus 100 accesses the server apparatus 200 via the user terminal 300, and refers to a result of the diagnosis by the server apparatus 200.

In each of the image forming apparatuses 100, the diagnosis paper CP is generated in this manner, and the diagnosis paper CP is scanned to generate scan image data.

Such scan image data is transmitted to the server apparatus 200.

Next, as described above, in the present exemplary embodiment, the server apparatus 200 diagnoses the image forming apparatus 100. Thereafter, the user or the maintenance person of the image forming apparatus 100 refers to the result of the diagnosis.

### [Diagnosis Process by Server Apparatus 200]

A diagnosis process executed by the server apparatus 200 will be described.

In the present exemplary embodiment, first, the CPU 11a (see Fig. 2) as an example of the processor provided in the server apparatus 200 (see Fig. 1) diagnoses the image forming apparatus 100 based on the scan image data described above, which is transmitted from the image forming apparatus 100, and then acquires a diagnosis result which is the result of the diagnosis.

More specifically, the CPU 11a analyzes the diagnosis image 61 that is an image formed on the diagnosis paper CP to acquire a diagnosis result.

In the present exemplary embodiment, a plurality of diagnosis items are predetermined, and the CPU 11a of the server apparatus 200 analyzes the diagnosis image 61 included in the scan image data to obtain an analysis result for each of the plurality of diagnosis items.

The CPU 11a of the server apparatus 200 obtains a final diagnosis result for the image forming apparatus 100 based on a plurality of obtained analysis results.

For example, in a case where density unevenness occurs in the diagnosis image 61, the CPU 11a of the server apparatus 200 acquires "density unevenness" as the diagnosis result for the image forming apparatus 100.

Further, the CPU 11a of the server apparatus 200 specifies a candidate for an action that is to be performed on the image forming apparatus 100 and is notified to a user of the image forming apparatus 100, based on the acquired diagnosis result.

Here, the "user" of the image forming apparatus 100 is not limited to a person who actually uses the image forming apparatus 100, and also includes an administrator or the like who belongs to the same organization as an organization to which the user of the image forming apparatus 100 belongs and manages the image forming apparatus 100.

The CPU 11a of the server apparatus 200 specifies a candidate for an action to be notified to the user of the image forming apparatus 100 based on the diagnosis result described above obtained by analyzing the diagnosis image 61 described above, which is an example of an image actually formed by the image forming apparatus 100.

In the present exemplary embodiment, the diagnosis result and the candidate for the action are stored in the secondary storage unit 12 (see Fig. 2) of the server apparatus 200 in a state of being associated with each other.

The CPU 11a of the server apparatus 200 reads out the candidate for the action associated with the acquired diagnosis result, from the secondary storage unit 12.

The CPU 11a of the server apparatus 200 specifies the read out candidate for the action as a candidate for the action to be notified to the user of the image forming apparatus 100.

Thereafter, the CPU 11a of the server apparatus 200 generates information such that the diagnosis result and the specified candidate for the action are notified to the user of the image forming apparatus 100, which is an example of a notification target person.

Therefore, the user of the image forming apparatus 100 is notified of the diagnosis result and the candidate for the action via the user terminal 300 (see Fig. 1) to be referred to by the user.

Accordingly, in the present exemplary embodiment, the user of the image forming apparatus 100 performs an action on the image forming apparatus 100.

The user may be notified of the diagnosis result and the candidate for the action via the operation reception unit 132 provided in the image forming apparatus 100.

### [Description of Screen Referred to by User of Image Forming Apparatus]

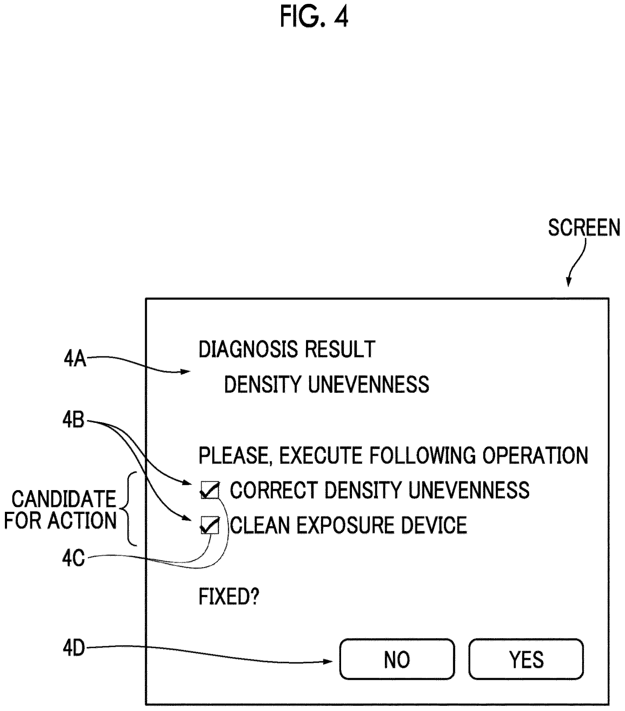

Fig. 4 is a diagram illustrating an example of a screen generated by the CPU 11a of the server apparatus 200 in a case of notifying a user of the image forming apparatus 100 of a diagnosis result and a candidate for an action.

The CPU 11a of the server apparatus 200 generates a screen illustrated in Fig. 4 in a case of notifying the user who is an example of a notification target person of the diagnosis result and the candidate for the action.

As indicated by a reference numeral 4A, the screen includes information on the diagnosis result. In this example, information indicating "density unevenness" is included as the information on the diagnosis result.

Further, information on the candidate for the action is displayed on this screen.

Specifically, in this example, "correct density unevenness" and "clean exposure device" are displayed as the information on the candidate for the action.

In the present exemplary embodiment, the information on the screen is transmitted to the user terminal 300 (see Fig. 1) to be referred to by the user of the image forming apparatus 100, and the screen is displayed on the user terminal 300.

Therefore, the user of the image forming apparatus 100 is notified of the diagnosis result and the candidate for the action for the image forming apparatus 100.

The CPU 11a of the server apparatus 200 generates information for preferentially notifying the user, who is a notification target person, of replacement-unrequired action information that is information on a replacement-unrequired action, which is an action not accompanied by replacement of a component, over replacement-required action information that is information on a replacement-required action, which is an action accompanied by replacement of the component, among the specified candidates for the action.

The density unevenness correction and the exposure device cleaning are actions which are not accompanied by replacement of components, and in the present exemplary embodiment, information on the density unevenness correction and the exposure device cleaning is preferentially notified to the user who is a notification target person than replacement-required action information (to be described below).

In the "correct density unevenness", an action of changing a parameter related to a density of the formed image is performed. In the "clean exposure device", an action of cleaning the exposure device 102 (see Fig. 3) is performed.

Here, as the "replacement-unrequired action", as described above, for example, the density unevenness correction or the exposure device cleaning is exemplified.

In addition, examples of the "replacement-required action" include replacement of the photosensitive drum 101 (see Fig. 3), replacement of the developing device 103, replacement of the exposure device 102, replacement of the charging device 101C, and the like.

On the screen illustrated in Fig. 4, information on the replacement-required action, such as information indicating replacement of the photosensitive drum 101, is not displayed.

The replacement-unrequired action is an action of performing cleaning or adjustment such as correction, and a cost required for the action is less than a cost for the replacement-required action accompanied by the replacement of the component.

In the present exemplary embodiment, the user of the image forming apparatus 100 refers to this screen illustrated in Fig. 4 via the user terminal 300 (see Fig. 1).

As a result, in the present exemplary embodiment, the replacement-unrequired action information is preferentially notified to the user, as compared with the replacement-required action information.

The CPU 11a of the server apparatus 200 generates a screen illustrated in Fig. 4, and further generates information for causing the user terminal 300 to display the screen.

Therefore, in the present exemplary embodiment, the replacement-unrequired action information that is information on the replacement-unrequired action is first notified to the user of the image forming apparatus 100.

Thereafter, in this process example, the replacement-unrequired action is performed by the user of the image forming apparatus 100. Specifically, the action of cleaning the exposure device 102 is performed, and the action of correcting density unevenness is performed.

The cleaning of the exposure device 102 is performed by the user of the image forming apparatus 100 manually operating the exposure device 102.

In addition, the density unevenness correction is performed by the user of the image forming apparatus 100, for example, by giving an instruction to start the density unevenness correction via the operation reception unit 132 (see Fig. 1).

The actual action of the density unevenness correction is performed by the information processing unit 100B of the image forming apparatus 100. The information processing unit 100B performs an action of changing a parameter related to the density of the formed image as the density unevenness correction.

Further, in a case where the user of the image forming apparatus 100 performs these replacement-unrequired actions, the user performs an operation on the user terminal 300, and inputs information indicating that the replacement-unrequired action is performed as indicated by a reference numeral 4B in Fig. 4.

More specifically, in this process example, the user of the image forming apparatus 100 performs an operation of selecting a rectangular selection field 4C to input the information indicating that the replacement-unrequired action is performed.

More specifically, in this example, the user performs an operation on the user terminal 300 to input that the exposure device 102 is to be cleaned and the density unevenness is to be corrected.

Further, in this process example, the user of the image forming apparatus 100 selects a selection button "No" indicated by a reference numeral 4D in Fig. 4, and inputs information indicating that the density unevenness still occurs even after the replacement-unrequired action is performed.

In this process example, after the replacement-unrequired action is performed, image formation on the paper P is performed by the image forming apparatus 100. In addition, in this process example, the density unevenness still occurs in this image.

In this case, the user of the image forming apparatus 100 selects a selection button of "No", and inputs the information indicating that the density unevenness still occurs even after the replacement-unrequired action is performed, to the user terminal 300.

In a case of the above situation, information indicating that the replacement-unrequired action is performed and information indicating that the density unevenness still occurs are transmitted from the user terminal 300 of the user to the server apparatus 200.

In other words, the information indicating that the replacement-unrequired action is performed is transmitted from the user terminal 300 of the user to the server apparatus 200, and information indicating that a defect still occurs in an image formed by the image forming apparatus 100 is transmitted from the user terminal 300 of the user to the server apparatus 200.

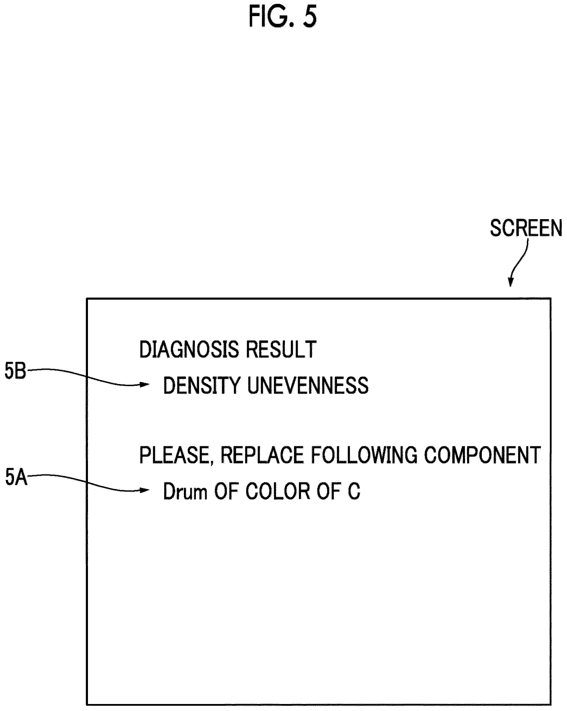

In a case where the CPU 11a of the server apparatus 200 receives these pieces of information from the user terminal 300, the CPU 11a generates a screen illustrated in Fig. 5 (a diagram illustrating a screen generated by the server apparatus 200) in accordance with the information, and further generates information for causing the user terminal 300 of the user to display the screen.

Therefore, in the present exemplary embodiment, the information on the screen is transmitted from the server apparatus 200 to the user terminal 300 of the user, and accordingly, the screen illustrated in Fig. 5 is displayed on the user terminal 300.

In the present exemplary embodiment, the screen illustrated in Fig. 5 is displayed on the user terminal 300 of the user, so that the user is notified of replacement-required action information.

The screen that is referred to by the user of the image forming apparatus 100 includes the replacement-required action information.

Specifically, as indicated by a reference numeral 5A, the screen includes information indicating that the photosensitive drum 101 installed in the image forming unit 107 provided corresponding to cyan needs to be replaced, as the replacement-required action information.

Further, as indicated by a reference numeral 5B, the screen also includes information on the density unevenness, which is information on the diagnosis result.

In the present exemplary embodiment, the user of the image forming apparatus 100 refers to this screen via the user terminal 300. Therefore, the user of the image forming apparatus 100 is notified of the replacement-required action information.

In the present exemplary embodiment, in this manner, the CPU 11a of the server apparatus 200 generates information for notifying a notification target person of the replacement-required action information after the notification target person is notified of the replacement-unrequired action information.

More specifically, the CPU 11a of the server apparatus 200 generates information for notifying the notification target person of the replacement-required action information after the notification target person is notified of the replacement-unrequired action information and after an operator actually performs a replacement-unrequired action.

The CPU 11a of the server apparatus 200 notifies the notification target person of the replacement-required action information, under a condition in which information indicating that the replacement-unrequired action such as cleaning or adjustment is ended is obtained.

Here, in a case where a component constituting the image forming apparatus 100 is replaced, a cost is incurred. In other words, in a case where the replacement-required action is performed, a cost is incurred.

In the present exemplary embodiment, in a case where the defect such as density unevenness described above can be resolved by the replacement-unrequired action that is an action not accompanied by the replacement of the component, the replacement-unrequired action is preferentially performed by the user.

In the present exemplary embodiment, in a case where the defect is not resolved even though the replacement-unrequired action is performed, the component which is a replacement-required action target, is replaced.

In this case, a cost required for the action is reduced as compared with a case where the user is notified of the replacement-required action information before the replacement-unrequired action information.

A countermeasure for a case where a defect occurs in the image formed by the image forming apparatus 100, cleaning, adjustment, replacement of a component, or the like is considered.

In the present exemplary embodiment, the user of the image forming apparatus 100 is preferentially notified of an action with which a cost is not incurred or a lower cost is incurred, such as cleaning or adjustment.

Therefore, the action with which the cost is not incurred or the lower cost is incurred is preferentially performed than an action of replacing a component, which is likely to be costly.

In a case where the density unevenness does not occur after the replacement-unrequired action is performed, the user of the image forming apparatus 100 selects a selection button "Yes" illustrated in Fig. 4, and inputs information indicating that the density unevenness does not occur to the user terminal 300.

In this case, in the present exemplary embodiment, the screen illustrated in Fig. 5 is not generated. In this case, the photosensitive drum 101 installed in the image forming unit 107 provided corresponding to cyan is not replaced.

In a case where a defect does not occur in the image after the replacement-unrequired action is performed, the user is not notified of the replacement-required action information, and in this case, the replacement-required action is not performed.

### [Description of Screen Referred to by Maintenance Person]

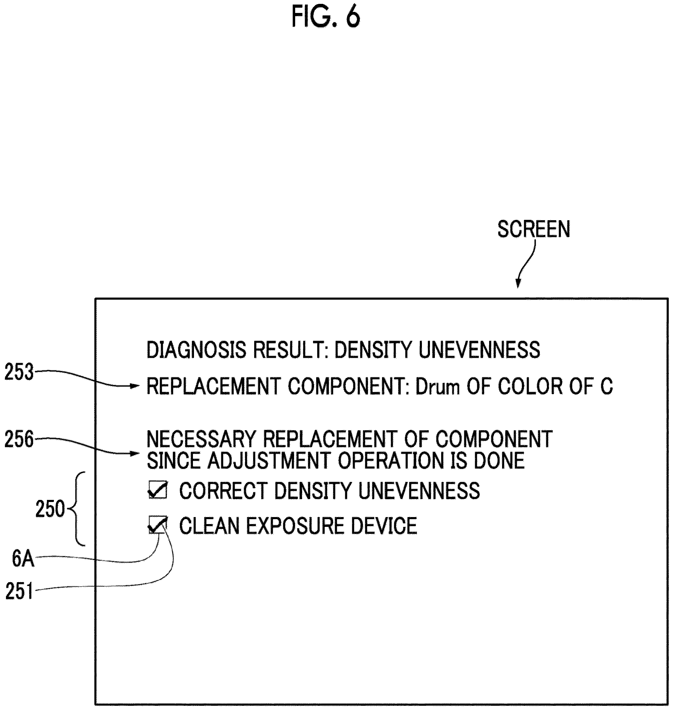

Fig. 6 is a diagram illustrating a screen that is referred to by a maintenance person.

In the present exemplary embodiment, in a case where a user of the image forming apparatus 100 performs a replacement-required action specified by replacement-required action information, the CPU 11a of the server apparatus 200 generates a screen illustrated in Fig. 6.

Specifically, for example, in a case where the photosensitive drum 101 corresponding to cyan is replaced by the user of the image forming apparatus 100, the CPU 11a of the server apparatus 200 generates the screen illustrated in Fig. 6 for the maintenance person of the image forming apparatus 100.

Check information 250 that is information indicating whether or not the replacement-unrequired action described above, which is notified to the user of the image forming apparatus 100 is actually performed is displayed on the screen illustrated in Fig. 6.

In the present exemplary embodiment, for a replacement-unrequired action that is actually performed, an image 251 indicating that the replacement-unrequired action is performed is displayed in an image having a rectangular shape indicated by a reference numeral 6A.

The maintenance person determines whether or not each replacement-unrequired action is actually performed based on whether or not the image 251 indicating that the replacement-unrequired action is performed exists.

In addition, on this screen illustrated in Fig. 6, execution information 253, which is information indicating that the replacement-required action notified to the user of the image forming apparatus 100 is actually performed, is displayed.

This screen illustrated in Fig. 6 is a common screen in which both the check information 250 and the execution information 253 are described. In the present exemplary embodiment, the one common screen includes the check information 250 and the execution information 253.

In addition, on the common screen, necessity information 256, which is information on a necessity of the replacement-required action actually performed, is displayed, in addition to the check information 250 and the execution information 253.

In the present exemplary embodiment, the CPU 11a of the server apparatus 200 generates and acquires the check information 250, the execution information 253, and the necessity information 256.

The CPU 11a of the server apparatus 200 generates the screen illustrated in Fig. 6 on which the check information 250, the execution information 253, and the necessity information 256 are described.

The information on the screen is transmitted to the user terminal 300 to be referred to by the maintenance person, and the maintenance person refers to the screen.

In this manner, in this process example, the CPU 11a of the server apparatus 200 generates a screen in which the check information 250 and the execution information 253 are described. Further, the CPU 11a of the server apparatus 200 also includes the necessity information 256, which is information on a necessity of a replacement-required action, on the screen.

In this process example illustrated in Fig. 6, the CPU 11a of the server apparatus 200 includes, on the screen, information indicating that the action is an action requiring the replacement-required action, as the necessity information 256.

Specifically, the CPU 11a of the server apparatus 200 includes, on the screen, information indicating that replacement of the photosensitive drum 101 corresponding to cyan is a necessary action, as the necessity information 256.

In this process example, as described above, the replacement-unrequired action notified to the user of the image forming apparatus 100 is actually performed, and then the replacement of the photosensitive drum 101 corresponding to cyan, which is the replacement-required action, is performed.

Here, the situation is that the replacement of the photosensitive drum 101 corresponding to cyan is actually performed and the action specified by the replacement-unrequired action is actually performed.

In this case, in a case where the CPU 11a of the server apparatus 200 generates this screen for the maintenance person, information indicating that the action is an action that requires a replacement-required action is included in this screen as the necessity information 256.

In the present exemplary embodiment, the screen illustrated in Fig. 6 is transmitted to the user terminal 300 of the maintenance person of the image forming apparatus 100, which is generated by the CPU 11a of the server apparatus 200.

Therefore, the maintenance person can specify whether or not the replacement-unrequired action is performed and then the replacement-required action is performed, by referring to this screen.

In a case where the maintenance person refers to the screen illustrated in Fig. 6, the maintenance person specifies that the replacement-unrequired action is performed and then the replacement-required action is performed.

Here, examples of the "maintenance person" include a person belonging to a company that provides a service of maintaining the image forming apparatus 100 to a user of the image forming apparatus 100.

The maintenance person can specify whether or not the replacement-unrequired action is performed and then the replacement-required action is performed, by referring to this screen. In other words, in this case, the maintenance person can specify whether or not the replacement-required action accompanied by the replacement of the component is an action that is really necessary.

In a case where the replacement-unrequired action is performed and then the replacement-required action is performed, the maintenance person specifies that the replacement-required action accompanied by the replacement of the component is an action that is necessary.

More specifically, in a case where the replacement-unrequired action is performed, the user selects "No" on the screen illustrated in Fig. 4, and the replacement-required action is required, the maintenance person specifies that the replacement-required action accompanied by the replacement of the component is a necessary action.

Here, it is also assumed that there is a contract in which a cost required for replacing the component is borne by the company side described above that provides the maintenance service.

In this case, in a case where it is possible to specify whether or not the replacement-required action is really necessary, for example, in a case where it is specified that the replacement-required action is not really necessary, the company side described above does not need to bear the cost required for replacing the component.

A case is assumed in which the user of the image forming apparatus 100 tries to perform the replacement-required action without performing the replacement-unrequired action on purpose to obtain the component for free. In other words, a case is assumed in which the user of the image forming apparatus 100 requests only the component without performing the replacement-unrequired action to obtain the component for free.

In this case, as described above, in a case where the maintenance person can specify whether or not the replacement-required action is performed after the replacement-unrequired action is performed, the maintenance person may not respond to the request for the replacement of the component in a state where the replacement-unrequired action is not performed.

In the present exemplary embodiment, after the replacement of the component is actually performed, it is possible to specify whether or not the replacement of the component is really necessary replacement. In other words, in the present exemplary embodiment, it is possible to specify whether or not the replacement of the component is truly necessary replacement in a posteriori manner.

In the present exemplary embodiment, in a case where it is not specified that the replacement of the component is really necessary, there may be a case where the company side described above does not bear a cost required for the replacement of the component.

In the process example illustrated in Fig. 6, a case where information indicating whether or not the replacement of the component is really necessary is displayed for each case is described.

Meanwhile, the present exemplary embodiment is not limited to this, and information on a plurality of cases may be included on one screen. In this case, the maintenance person can check the information indicating whether or not the replacement of the component is really necessary for each of a plurality of cases by referring to the one screen.

### [Another Example of Screen Referred to by Maintenance Person]

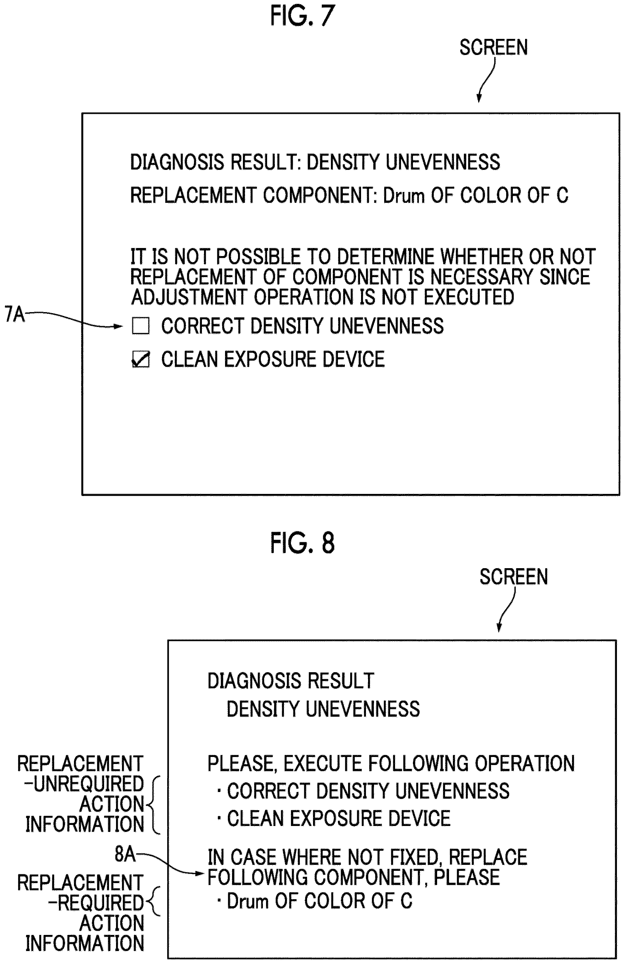

Fig. 7 is a diagram illustrating still another example of a screen generated by the CPU 11a of the server apparatus 200.

Here, a screen that is generated in a case where a replacement-required action is performed in a state in which all replacement-unrequired actions are not performed is illustrated as a screen for a maintenance person.

On this screen, the necessity information 256 (see Fig. 6) indicating that the replacement-required action is necessary is not displayed.

In addition, on this screen, a location indicated by a reference numeral 7A is blank, and information indicating that some of the replacement-unrequired actions are not performed is displayed on this screen.

In this case, the maintenance person who refers to this screen specifies that the replacement-required action is performed without performing the replacement-unrequired action. In this case, the maintenance person recognizes that the replacement-required action may not be necessary.

In this case, there is a probability that a cost of a replaced component will not be borne by the maintenance person.

### [Another Example of Screen of Image Forming Apparatus 100 Referred to by User]

Fig. 8 is a diagram illustrating another example of the screen that is referred to by the user of the image forming apparatus 100 after the diagnosis of the image forming apparatus 100.

In other words, Fig. 8 is a diagram illustrating still another example of the screen used in a case of notifying the user of a result of the diagnosis and a candidate for an action.

On this screen, unlike the screen illustrated in Fig. 4, both the replacement-unrequired action information and the replacement-required action information are displayed on the common screen.

On this screen, the replacement-unrequired action information and the replacement-required action information are displayed in a manner in which the user who is a notification target person easily recognizes the replacement-unrequired action information than the replacement-required action information.

On this screen, the replacement-unrequired action information is displayed at a higher position than the replacement-required action information. Therefore, the user of the image forming apparatus 100 recognizes the replacement-unrequired action information more preferentially than the replacement-required action information.

Further, as indicated by a reference numeral 8A, information indicating that the replacement-required action is to be performed in a case where a defect of an image is not resolved even though the replacement-unrequired action is performed is displayed on the screen.

The CPU 11a of the server apparatus 200 generates this screen, and further generates information for causing the user terminal 300 of the user of the image forming apparatus 100 to display this screen.

Therefore, this screen is displayed on the user terminal 300 that is referred to by the user.

As described above, the screen may be displayed on the operation reception unit 132 (see Fig. 1) of the image forming apparatus 100.

Here, in this manner, the CPU 11a of the server apparatus 200 generates information for causing the user terminal 300 to display the screen in which the information is displayed in a manner in which the replacement-unrequired action information is more easily recognized by the notification target person than the replacement-required action information.

More specifically, the CPU 11a of the server apparatus 200 generates information for causing the user terminal 300 to display a screen in which the replacement-unrequired action information is displayed at a higher position than the replacement-required action information.

In this example, as information for preferentially notifying a notification target person of replacement-unrequired action information than replacement-required action information, the CPU 11a of the server apparatus 200 generates information for causing the user terminal 300 of the user to display a screen in which information is displayed such that the replacement-unrequired action information is more easily recognized by the notification target person than the replacement-required action information.

More specifically, the CPU 11a of the server apparatus 200 generates information for causing the user terminal 300 to display a screen in which the replacement-unrequired action information is displayed at a higher position than the replacement-required action information.

More specifically, the CPU 11a of the server apparatus 200 generates information for causing the user terminal 300 to display a screen in which the replacement-unrequired action information is displayed at an upper position than the replacement-required action information.

The replacement-unrequired action is likely to be performed with higher priority than the replacement-required action, also with this screen generated by the CPU 11a of the server apparatus 200. In other words, the replacement-unrequired action is more likely to be performed before the replacement-required action.

Further, in this screen illustrated in Fig. 8, as indicated by the reference numeral 8A, information indicating that the replacement-required action is to be performed in a case where the defect of the image is not resolved even though the replacement-unrequired action is performed is displayed.

In this process example as well, in a case where a defect does not occur in the image after the replacement-unrequired action is performed, the replacement-required action is not performed.

The replacement-unrequired action is likely to be performed with higher priority than the replacement-required action with the screen illustrated in Fig. 8.

### [Still Another Example of Screen of Image Forming Apparatus 100 Referred to by User]

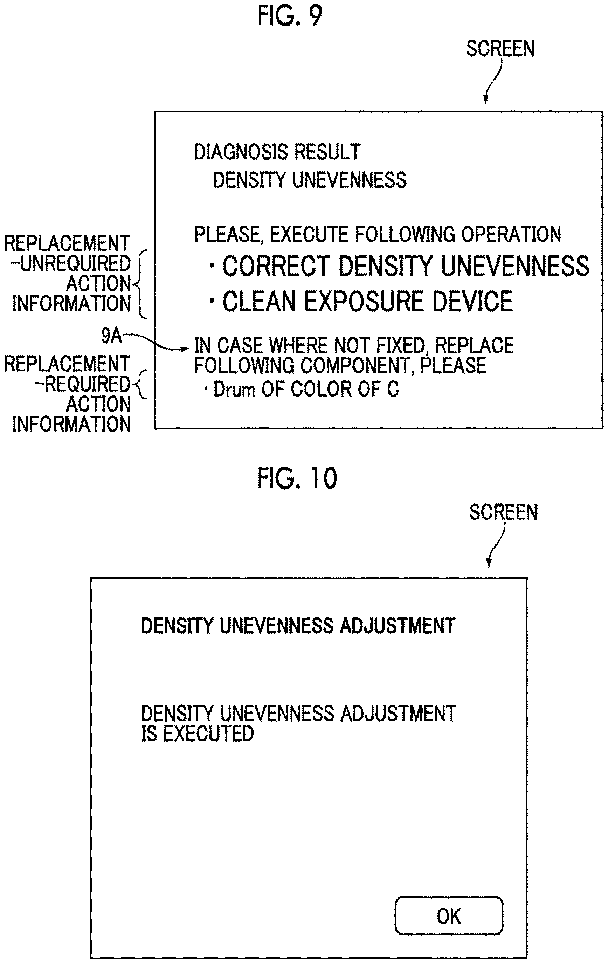

Fig. 9 is a diagram illustrating still another example of the screen that is referred to by the user of the image forming apparatus 100 after the diagnosis of the image forming apparatus 100. In other words, Fig. 9 is a diagram illustrating still another example of the screen used in a case of notifying the user of a result of the diagnosis and a candidate for an action.

In this screen illustrated in Fig. 9, replacement-unrequired action information is displayed larger than replacement-required action information. In other words, on this screen, a size of a text representing the replacement-unrequired action information is larger than a size of a text representing the replacement-required action information.

In this process example, as information for causing the user terminal 300 to display a screen in which information is displayed in a manner in which the replacement-unrequired action information is more easily recognized by the user than the replacement-required action information, the CPU 11a of the server apparatus 200 generates information for causing the user terminal 300 to display the screen in which the replacement-unrequired action information is displayed to be larger than the replacement-required action information.

In this case, the replacement-unrequired action information is more conspicuous than the replacement-required action information, and in this case as well, the replacement-unrequired action information is preferentially notified to the user of the image forming apparatus 100 than the replacement-required action information.

In this case as well, a probability that a replacement-unrequired action is performed and then a replacement-required action is performed is increased.

In addition, as illustrated in Fig. 9, information indicating that the replacement-required action is to be performed in a case where a defect of an image is not resolved even though the replacement-unrequired action is executed is displayed on this screen as indicated by a reference numeral 9A.

By displaying this information, a probability that the replacement-unrequired action is performed more preferentially than the replacement-required action is further increased.

In addition, in addition to this, by making a color of the text representing the replacement-unrequired action information different from a color of the text representing the replacement-required action information, the user of the image forming apparatus 100 may be notified of the replacement-unrequired action information with higher priority than the replacement-required action information.

Specifically, for example, a process may be performed such that the text representing the replacement-required action information is displayed in black, and the text representing the replacement-unrequired action information is displayed in red.

In other words, a process may be performed such that the text representing the replacement-required action information is displayed in black, and the text representing the replacement-unrequired action information is displayed in a color other than black.

Here, in the process example illustrated in Fig. 8, for some of the replacement-unrequired actions, it is specified that the replacement-unrequired action is performed without being based on an operation by the user.

In the process example illustrated in Fig. 4, it is specified that the cleaning action on the exposure device 102 and the exposure unevenness correction action, which are replacement-unrequired actions, are performed by the operation of the user of the image forming apparatus 100 on the user terminal 300.

More specifically, in the process example illustrated in Fig. 4, the user of the image forming apparatus 100 inputs information indicating that the replacement-unrequired action is performed as indicated by the reference numeral 4B in Fig. 4 to specify that the cleaning action on the exposure device 102 and the exposure unevenness correction action, which are the replacement-unrequired actions, are performed.

On the other hand, in the process example illustrated in Fig. 8, the information processing unit 100B (see Fig. 1) of the image forming apparatus 100 specifies that a density unevenness correction is performed. In the process example illustrated in Fig. 8, for the density unevenness correction, the image forming apparatus 100 specifies that the density unevenness correction is performed by the image forming apparatus 100.

In this case, information indicating that the density unevenness correction is performed is automatically transmitted from the image forming apparatus 100 to the server apparatus 200. Accordingly, the CPU 11a of the server apparatus 200 specifies that the density unevenness correction is performed.

In the process example illustrated in Fig. 8, the CPU 11a of the server apparatus 200 specifies that the density unevenness correction is performed based on the information automatically transmitted from the image forming apparatus 100 to the server apparatus 200, instead of the information input by the user by operating the user terminal 300.

In this process example illustrated in Fig. 8, the specifying that the cleaning action on the exposure device 102 is performed is specified based on the operation of the user on the image forming apparatus 100 on the user terminal 300, as described above.

Information indicating that the cleaning action on the exposure device 102 is performed is transmitted from the user terminal 300 to the server apparatus 200. Accordingly, the CPU 11a of the server apparatus 200 specifies that the cleaning action on the exposure device 102 is performed.

More specifically, in this case, information indicating that the cleaning action on the exposure device 102 is performed, which is information input by the user of the image forming apparatus 100, is transmitted from the user terminal 300 to the server apparatus 200. Accordingly, the CPU 11a of the server apparatus 200 specifies that the cleaning action on the exposure device 102 is performed.

In addition, the present invention is not limited to this, and a configuration may be adopted in which a sensor for detecting the cleaning on the exposure device 102 is provided in the image forming apparatus 100, and the image forming apparatus 100 specifies that the cleaning action on the exposure device 102 is performed.

In this case, the information indicating that the cleaning action on the exposure device 102 is performed is transmitted from the image forming apparatus 100 to the server apparatus 200. Accordingly, the CPU 11a of the server apparatus 200 specifies that the cleaning action on the exposure device 102 is performed.

The CPU 11a of the server apparatus 200 may specify that the replacement-unrequired action is performed based on the information automatically transmitted from the image forming apparatus 100 without being based on the input of the information by the user in this manner.

Here, in the process example illustrated in Fig. 8, as described above, the image forming apparatus 100 specifies that the density unevenness correction action is performed. Information indicating that the density unevenness correction action is performed is transmitted from the image forming apparatus 100 to the server apparatus 200.

In this case, in the present exemplary embodiment, a screen illustrated in Fig. 10 (a diagram illustrating a screen generated by the CPU 11a of the server apparatus 200) is displayed on the user terminal 300 or the operation reception unit 132 of the image forming apparatus 100.

Therefore, the user of the image forming apparatus 100 recognizes that the density unevenness correction action is completed.

In a case where the image forming apparatus 100 specifies that the replacement-unrequired action is performed, in the present exemplary embodiment, the screen illustrated in Fig. 10 is presented to the user of the image forming apparatus 100.

Here, although a case where the image forming apparatus 100 specifies that the replacement-unrequired action is performed is described, a configuration may be adopted in which the image forming apparatus 100 specifies that the replacement-required action is performed.

### [Still Another Example of Screen Referred to by Maintenance Person]

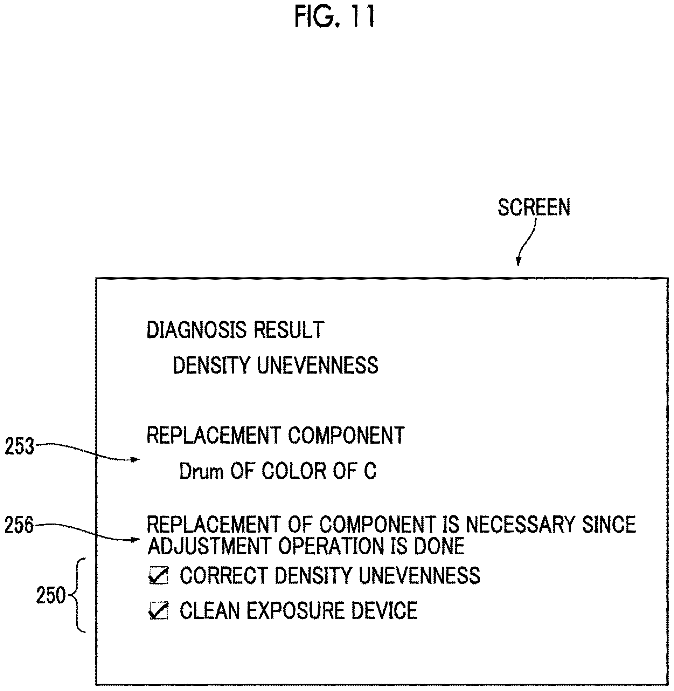

Fig. 11 is a diagram illustrating another example of the screen that is referred to by a maintenance person.

As described above, in a case where the image forming apparatus 100 specifies that a density unevenness correction is performed, and it is specified that cleaning on the exposure device 102 is performed by an operation of a user on the user terminal 300, the CPU 11a of the server apparatus 200 generates a screen illustrated in Fig. 11.

Also in this screen illustrated in Fig. 11, in the same manner as in the above, information indicating that a replacement-unrequired action notified to the user of the image forming apparatus 100 is actually performed is displayed as the check information 250.

In addition, on this screen illustrated in Fig. 11 as described above, the execution information 253 indicating that a replacement-required action is performed is displayed. Specifically, as the execution information 253, information indicating that replacement of the photosensitive drum 101 (see Fig. 3) corresponding to cyan is performed is displayed.

Further, on this screen illustrated in Fig. 11, as information on a diagnosis result, information on density unevenness is displayed in the same manner as in the above.

Further, on this screen illustrated in Fig. 11, in the same manner as in the above case, the necessity information 256 indicating that the action is an action that requires the replacement-required action is displayed.

In this case, the maintenance person specifies that the performed replacement-required action is a necessary action.

### [Description of Screen Displayed at Time of Forming Diagnosis Image]

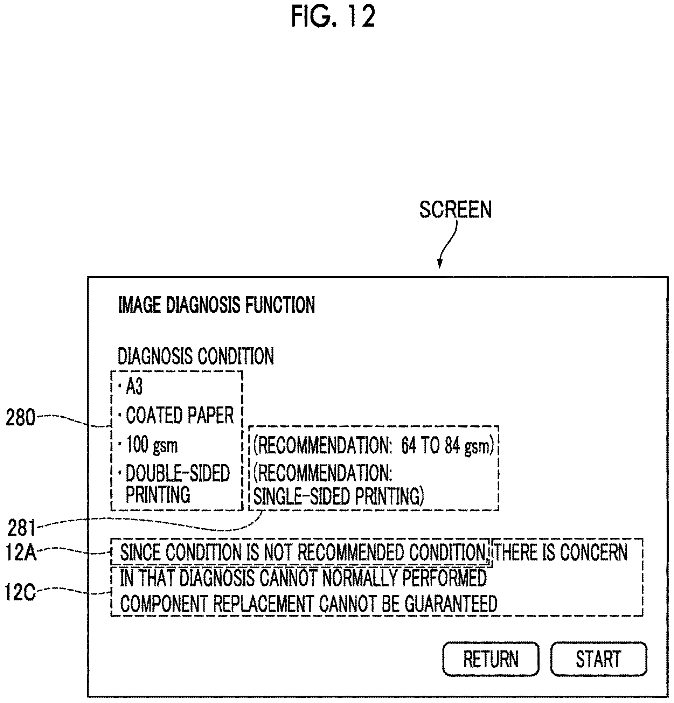

Fig. 12 is a diagram illustrating a screen displayed on the operation reception unit 132 (see Fig. 1) of the image forming apparatus 100.

Here, a process to be executed in a case where the diagnosis image 61 (see Fig. 1) for diagnosing the image forming apparatus 100 is formed will be described.

In a case where the diagnosis image 61 is formed, the CPU 11a of the server apparatus 200 first acquires condition information that is information on a condition under which the image forming apparatus 100 forms the diagnosis image 61 for diagnosis on the image forming apparatus 100.

Specifically, the CPU 11a of the server apparatus 200 acquires the condition information that is information on the condition under which the image forming apparatus 100 forms the diagnosis image 61, based on information transmitted from the image forming apparatus 100.

More specifically, in the present exemplary embodiment, first, the image forming apparatus 100 acquires information on a setting performed by the user on the image forming apparatus 100 or information obtained by a sensor provided in the image forming apparatus 100 as the condition information.

More specifically, the image forming apparatus 100 acquires, as the condition information in a case of forming the diagnosis image 61, information on the paper P selected by the user by performing an operation on the operation reception unit 132 or information from the sensor that acquires information on a type of paper P or the like.

In the present exemplary embodiment, the condition information is transmitted from the image forming apparatus 100 to the server apparatus 200, and the server apparatus 200 acquires the condition information.

The CPU 11a of the server apparatus 200 compares the acquired condition information with a predetermined condition that is a criterion, and then generates the screen illustrated in Fig. 12.

Further, the CPU 11a of the server apparatus 200 generates information for causing the operation reception unit 132 of the image forming apparatus 100 to display the generated screen.

Therefore, the screen illustrated in Fig. 12 is displayed on the operation reception unit 132 of the image forming apparatus 100. The screen includes condition information 280 described above, which is acquired by the server apparatus 200 from the image forming apparatus 100.

In the present exemplary embodiment, the CPU 11a of the server apparatus 200 generates, in this manner, information for notifying the user of the image forming apparatus 100 that is an example of the notification target person of the condition information 280.

Therefore, in a case of generating the diagnosis paper CP, the user of the image forming apparatus 100 refers to the screen to recognize the condition information 280, which is information on the condition in a case of generating the diagnosis paper CP.

Here, a case where this screen illustrated in Fig. 12 is displayed on the operation reception unit 132 of the image forming apparatus 100 will be described, and this screen may be displayed on the user terminal 300 to be referred to by the user of the image forming apparatus 100.

In addition, here, although a case where this screen is generated by the CPU 11a of the server apparatus 200 is described as an example, this screen may be generated by the information processing unit 100B (see Fig. 1) of the image forming apparatus 100.

In this process example, the condition information 280 (see Fig. 12) acquired by the CPU 11a of the server apparatus 200 is in a situation in which the condition information 280 does not satisfy a predetermined condition 281 as a criterion.

In this case, as illustrated in the screen illustrated in Fig. 12, information indicating that a condition specified by the condition information 280 does not satisfy the predetermined condition 281 as the criterion is displayed as indicated by a reference numeral 12A.

Specifically, on the screen illustrated in Fig. 12, information indicating that the condition specified by the condition information 280 is not a recommended condition is displayed.

In a case where the condition specified by the condition information 280 does not satisfy the predetermined condition 281 as a criterion, the CPU 11a of the server apparatus 200 generates a screen including information indicating that the condition specified by the condition information 280 does not satisfy the predetermined condition 281.

In other words, in a case where the condition specified by the condition information 280 does not satisfy the predetermined condition 281, the CPU 11a of the server apparatus 200 generates information for notifying the user of the image forming apparatus 100 of the information indicating that the condition is not satisfied.

In the present exemplary embodiment, with this, the information indicating that the condition specified by the condition information 280 does not satisfy the predetermined condition 281 is included in the screen to be referred to by the user. Specifically, information indicating that the condition specified by the condition information 280 is not a recommended condition is included.

Further, the screen illustrated in Fig. 12 includes the condition information 280, and the user also recognizes the condition information 280.

In this process example, both the condition information 280 and the information indicating that the condition specified by the condition information 280 does not satisfy the predetermined condition 281 are displayed, and only one of the two pieces of information may be displayed.

In addition, this screen illustrated in Fig. 12 includes information indicating that the action may not effectively function.

In this process example, in a case where the condition specified by the condition information 280 does not satisfy the predetermined condition 281, the CPU 11a of the server apparatus 200 includes, in the generated screen, the information indicating that the action may not effectively function as indicated by a reference numeral 12C in Fig. 12.

More specifically, the CPU 11a of the server apparatus 200 includes, in the generated screen, information indicating that the action specified based on the diagnosis of the image forming apparatus 100 may not effectively function.

More specifically, in this example, as indicated by a reference numeral 12C, the CPU 11a of the server apparatus 200 includes information indicating that the action of replacing a component cannot be guaranteed, as the information indicating that the action may not function effectively, on the screen.

In other words, the CPU 11a of the server apparatus 200 includes, in the screen, the information indicating that the replacement-required action cannot be guaranteed, as the information indicating that the action may not function effectively.

In this manner, the CPU 11a of the server apparatus 200 generates information for notifying a notification target person of the information indicating that the action may not effectively function.

Further, this screen illustrated in Fig. 12 includes information on the predetermined condition 281 as a criterion, which is a target for comparison with the condition specified by the condition information 280. In other words, a condition as a recommendation is included in the screen illustrated in Fig. 12.

The screen illustrated in Fig. 12 may not be uniformly generated, and the CPU 11a of the server apparatus 200 may generate this screen only in a case where the condition specified by the condition information 280 does not satisfy the predetermined condition 281 as a criterion.

In a case where the condition specified by the condition information 280 does not satisfy the predetermined condition 281 as a criterion, the CPU 11a of the server apparatus 200 may generate information indicating that the condition specified by the condition information 280 does not satisfy the predetermined condition 281, or information for notifying the notification target person of the information on the predetermined condition 281.

In other words, the screen illustrated in Fig. 12 may be generated only in a case where the condition specified by the condition information 280 does not satisfy the predetermined condition 281, and may be presented to the user only in a case where the condition specified by the condition information 280 does not satisfy the predetermined condition 281.

In a case where the condition specified by the condition information 280 satisfies the predetermined condition 281, the screen illustrated in Fig. 12 may not be generated, and the information on the condition information 280 may not be notified to the user of the image forming apparatus 100.

The CPU 11a of the server apparatus 200 may generate notification information that is information for notifying the notification target person of the condition information 280 in a case where the condition specified by the condition information 280 does not satisfy the predetermined condition 281, and may not generate the notification information in a case where the condition specified by the condition information 280 satisfies the predetermined condition 281.

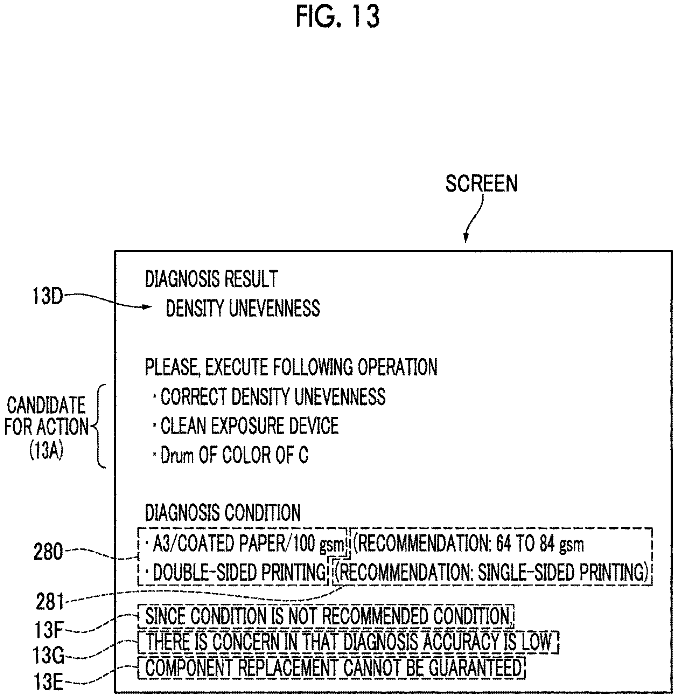

Fig. 13 is a diagram illustrating a screen in which a result of diagnosis performed based on the diagnosis image 61 formed under the condition information 280 illustrated in Fig. 12 is displayed. The screen is generated by the CPU 11a of the server apparatus 200.

The CPU 11a of the server apparatus 200 diagnoses the image forming apparatus 100 based on the diagnosis image 61 formed under the condition information 280 illustrated in Fig. 12 to obtain the result of the diagnosis on the image forming apparatus 100.

The CPU 11a of the server apparatus 200 generates a screen including the result of the diagnosis, which is indicated by a reference numeral 13D in Fig. 13.

In addition, as indicated by a reference numeral 13A, the CPU 11a of the server apparatus 200 includes a candidate for an action, on the screen to be generated, in the same manner as described above.

Further, in this process example, the CPU 11a of the server apparatus 200 includes the condition information 280 described above, which is information on a condition in a case where the diagnosis image 61 is formed, in the screen to be generated.

Further, the CPU 11a of the server apparatus 200 includes information on the predetermined condition 281 as a criterion, in the screen.

Further, in this process example, as indicated by a reference numeral 13E, the CPU 11a of the server apparatus 200 includes information indicating that the action may not be effectively function, in this screen.

Specifically, the CPU 11a of the server apparatus 200 includes information indicating that a replacement-required action may not effectively function, in this screen.

In this case, the user is notified that the replacement of the photosensitive drum 101 corresponding to cyan may not function effectively.

In this process example, in a case where scan image data of the diagnosis image 61 is transmitted from the image forming apparatus 100 to the server apparatus 200, the condition information 280 which is information on a condition for diagnosis is also transmitted from the image forming apparatus 100 to the server apparatus 200.

More specifically, the condition information 280 that is information on the condition used in a case where the diagnosis image 61 is formed is transmitted from the image forming apparatus 100 to the server apparatus 200.

The CPU 11a of the server apparatus 200 acquires the condition information 280 transmitted from the image forming apparatus 100.

In generating the screen in which the result of the diagnosis on the image forming apparatus 100 or the candidate for the action is displayed, the CPU 11a of the server apparatus 200 also includes the condition information 280 in the screen.

In a case where a user of the image forming apparatus 100 performs diagnosis on the image forming apparatus 100, an incorrect setting is made, in some cases.

In this case, in the present exemplary embodiment, the user of the image forming apparatus 100 is notified of an incorrect condition due to the incorrect setting. Therefore, a probability that the user realizes the incorrect setting is increased, and a probability that the user corrects the setting that is already performed is increased. In this case, erroneous diagnosis due to the incorrect setting is less likely to be performed.

Even though there is a situation in which a diagnosis result indicating that the setting is normal is obtained in a case where the setting is normal, since the setting is incorrect, a situation in which the diagnosis result indicating that the setting is normal is not obtained may occur. In the present exemplary embodiment, this situation in which the result of the diagnosis indicating that the setting is normal is not obtained due to the incorrect setting is unlikely to occur.

Further, in the present exemplary embodiment, as illustrated by a reference numeral 13F in Fig. 13, even in a case of notifying the user of the image forming apparatus 100 of the result of the diagnosis or the candidate for the action, the user of the image forming apparatus 100 is notified that the condition specified by the condition information 280 does not satisfy the predetermined condition 281 as a criterion.

Further, in the present exemplary embodiment, as indicated by a reference numeral 13G in Fig. 13, the user of the image forming apparatus 100 is notified of information indicating that accuracy of the diagnosis may be low.

In other words, the user of the image forming apparatus 100 is notified that there is a probability of an error in the diagnosis of the image forming apparatus 100.

After referring to the screen illustrated in Fig. 13, the user of the image forming apparatus 100 tries to perform the action on the image forming apparatus 100. In this case, in a case where the content illustrated in Fig. 13 is notified to the user, it is unlikely that the user will perform the replacement-required action. In this case, it is less likely that a component is unnecessarily replaced.

In addition, in this case, a probability that the user of the image forming apparatus 100 changes the setting at a time of the diagnosis of the image forming apparatus 100 and then the new diagnosis image 61 is formed is increased.

In this case, a probability that the new diagnosis image 61 is formed under the new condition satisfying the predetermined condition 281 is increased, and the diagnosis of the image forming apparatus 100 is performed with higher accuracy.

### [Display of Diagnosis Score]

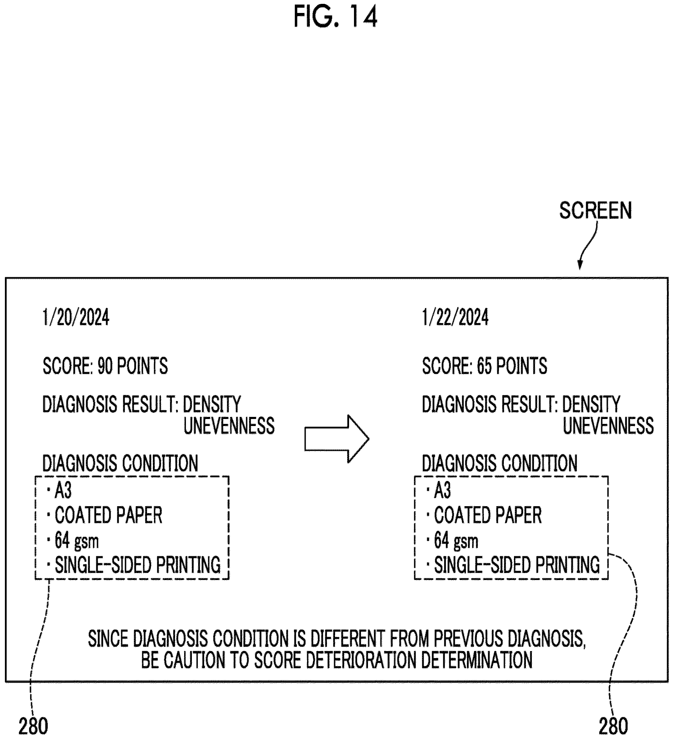

Fig. 14 is a diagram illustrating still another example of a screen generated by the CPU 11a of the server apparatus 200. This screen is displayed on the user terminal 300 to be referred to by, for example, a maintenance person.

As illustrated in Fig. 14, the CPU 11a of the server apparatus 200 further generates a common screen including a result of diagnosis on the image forming apparatus 100 based on the diagnosis image 61 formed by the image forming apparatus 100 and the condition information 280 that is information on a condition used in a case where the diagnosis image 61 is formed. Here, a score is also displayed as the result of the diagnosis.

Further, in generating the common screen in which both the result of the diagnosis and the condition information 280 are described, in a case where the image forming apparatus 100 forms the diagnosis image 61 a plurality of times, as illustrated in Fig. 14, the CPU 11a of the server apparatus 200 generates the common screen in which the result of the diagnosis for each of the diagnosis images 61 formed the plurality of times and the condition information 280 corresponding to the result of the diagnosis are described.

In the example illustrated in Fig. 14, the diagnosis of the image forming apparatus 100 is performed on each of January 20, 2024 and January 22, 2024. In the example illustrated in Fig. 14, a common screen in which the result of the diagnosis for each of the diagnosis images 61 obtained by diagnosis for two times and the condition information 280 corresponding to the result of the diagnosis are described is generated.

The image forming apparatus 100 forms the diagnosis image 61 the plurality of times by shifting a time, in some cases.

In this case, the CPU 11a of the server apparatus 200 generates a common screen in which the result of the diagnosis for each of the diagnosis images 61 formed the plurality of times and the condition information 280 corresponding to the result of the diagnosis are displayed.

In this process example illustrated in Fig. 14, a screen in which both the result of the diagnosis and the condition information 280, which is information on the condition used in a case where the result of the diagnosis is obtained, are displayed is generated.

Therefore, in the present exemplary embodiment, the maintenance person can specify whether or not the score is affected by the condition at the time of the diagnosis. In other words, the maintenance person can specify whether or not the result of the diagnosis is affected by the condition at the time of the diagnosis.

In other words, the maintenance person can specify a relationship between the result of the diagnosis and the condition at the time of the diagnosis.

As in the present exemplary embodiment, in a case where both the result of the diagnosis and the information on the condition are displayed, the maintenance person can specify that the user of the image forming apparatus 100 may intentionally decrease the condition to form the diagnosis image 61.

A case is also assumed in which the user of the image forming apparatus 100 intentionally performs the diagnosis of the image forming apparatus 100 under a bad condition to obtain a new component free of charge.

In the present exemplary embodiment, the maintenance person can specify that there is a probability that the image forming apparatus 100 is diagnosed under the bad condition that is intentionally decreased.

For example, in a case where the score is low and the predetermined condition 281 (not illustrated in Fig. 14) in the diagnosis is not satisfied, the maintenance person specifies that there is a probability that the diagnosis of the image forming apparatus 100 is performed under the bad condition that is intentionally decreased.

In addition, the CPU 11a of the server apparatus 200 may generate information on a reliability of the result of the diagnosis of the image forming apparatus 100 based on the condition information 280, and the information may be included in a screen to be referred to by the maintenance person. In other words, the CPU 11a of the server apparatus 200 may notify the maintenance person of the information.

For example, the CPU 11a of the server apparatus 200 generates information such as low reliability or high reliability as information on the reliability of the result of the diagnosis, and includes the information in a screen to be referred to by the maintenance person.

For example, in a case where the condition specified by the condition information 280 satisfies the predetermined condition 281, the CPU 11a of the server apparatus 200 generates information indicating that the reliability is high, and includes the information in a screen to be referred to by the maintenance person.

In addition, for example, in a case where the condition specified by the condition information 280 does not satisfy the predetermined condition 281, the CPU 11a of the server apparatus 200 generates information indicating that the reliability is low, and includes the information in a screen to be referred to by the maintenance person.

In addition, the CPU 11a of the server apparatus 200 may determine whether or not to notify the user of the image forming apparatus 100 of replacement-unrequired action information and replacement-required action information, based on the condition information 280.

In this case, for example, in a case where the condition specified by the condition information 280 satisfies the predetermined condition 281 as a criterion, the CPU 11a of the server apparatus 200 generates the screens illustrated in Figs. 4, 5, 8, 9, and the like, and presents the screens to the user.

In this case, the user of the image forming apparatus 100 is notified of the replacement-unrequired action information and the replacement-required action information.

On the other hand, in a case where the condition specified by the condition information 280 does not satisfy the predetermined condition 281 as a criterion, the CPU 11a of the server apparatus 200 does not generate the screens illustrated in Figs. 4, 5, 8, 9, and the like.

In this case, the user of the image forming apparatus 100 is not notified of the replacement-unrequired action information and the replacement-required action information.

In this case, for example, the CPU 11a of the server apparatus 200 may notify the user of the image forming apparatus 100 of a notification prompting a change of the condition, such as "Please change the condition for forming the diagnosis image 61".

### (Supplementary Note)

(((1))) An information processing system comprising:
   a processor configured to:
   specify a candidate for an action to be performed on an image forming apparatus that forms an image on a recording medium; and
   generate information for notifying a notification target person of replacement-unrequired action information that is information on a replacement-unrequired action which is an action not accompanied by replacement of a component with higher priority than replacement-required action information which is information on a replacement-required action which is an action accompanied by replacement of the component, among specified candidates for the action.
(((2))) The information processing system according to (((1))), wherein the processor is configured to:
   generate information for notifying the notification target person of the replacement-required action information after the notification target person is notified of the replacement-unrequired action information.
(((3))) The information processing system according to (((2))), wherein the processor is configured to:
   generate information for notifying the notification target person of the replacement-required action information after the notification target person is notified of the replacement-unrequired action information and an operator actually performs the replacement-unrequired action.
(((4))) The information processing system according to (((1))), wherein the processor is configured to:
   as the information for notifying the notification target person of the replacement-unrequired action information with higher priority than the replacement-required action information,
   generate information for causing a display device to display a screen in which both the replacement-unrequired action information and the replacement-required action information are displayed in a manner in which both the replacement-unrequired action information and the replacement-required action information are displayed and the replacement-unrequired action information is more easily recognized by the notification target person than the replacement-required action information.
(((5))) The information processing system according to (((4))), wherein the processor is configured to:
   as the information for causing the display device to display the screen in which both the replacement-unrequired action information and the replacement-required action information are displayed in the manner in which the replacement-unrequired action information is more easily recognized by the notification target person than the replacement-required action information,
   generate information for causing the display device to display a screen in which the replacement-unrequired action information is displayed at a higher position than the replacement-required action information.
(((6))) The information processing system according to (((4))), wherein the processor is configured to:
   as the information for causing the display device to display the screen in which both the replacement-unrequired action information and the replacement-required action information are displayed in the manner in which the replacement-unrequired action information is more easily recognized by the notification target person than the replacement-required action information,
   generate information for causing the display device to display a screen in which the replacement-unrequired action information is displayed larger than the replacement-required action information.
(((7))) The information processing system according to any one of (((1))) to (((6))), wherein the processor is configured to:
   further generate a common screen in which check information indicating whether or not the replacement-unrequired action specified by the replacement-unrequired action information notified to the notification target person is actually performed, and execution information indicating that the replacement-required action specified by the replacement-required action information notified to the notification target person is actually performed are described.
(((8))) The information processing system according to (((7))), wherein the processor is configured to:
   further generate the common screen in which information on a necessity of the actually performed replacement-required action is described, in addition to the check information and the execution information.
(((9))) The information processing system according to (((8))), wherein the processor is configured to:
   in a case where the replacement-unrequired action specified by the replacement-unrequired action information notified to the notification target person is actually performed and then the replacement-required action specified by the replacement-required action information notified to the notification target person is actually performed, generate the common screen in which information indicating that the replacement-required action is a necessary action is further described, in addition to the check information and the execution information.
(((10))) An information processing system comprising:
   a processor configured to:
   acquire condition information that is information on a condition under which an image forming apparatus that forms an image on a recording medium forms a diagnosis image that is an image for diagnosis; and
   generate information for notifying a notification target person of the condition information.
(((11))) The information processing system according to (((10))), wherein the processor is configured to:
   in a case where the condition specified by the condition information does not satisfy a predetermined condition, generate the information for notifying the notification target person of the condition information.
(((12))) The information processing system according to (((10))) or (((11))), wherein the processor is configured to:
   in a case where the condition specified by the condition information does not satisfy a predetermined condition, further generate information for further notifying the notification target person of information indicating that the condition specified by the condition information does not satisfy the predetermined condition based on a criterion.
(((13))) The information processing system according to any one of (((10))) to (((12))), wherein the processor is configured to:
   in a case where the condition specified by the condition information does not satisfy a predetermined condition, further generate information for notifying the notification target person of information indicating that there is a probability that an action, which is specified based on the diagnosis on the image forming apparatus and performed on the image forming apparatus, does not function effectively.
(((14))) The information processing system according to any one of (((10))) to (((13))), wherein the processor is configured to:
   in a case where the condition specified by the condition information does not satisfy a predetermined condition as a criterion, further generate information for notifying the notification target person of information on the predetermined condition.
(((15))) The information processing system according to any one of (((10))) to (((14))), wherein the processor is configured to:
   further generate a common screen including a result of diagnosis on the image forming apparatus based on the diagnosis image formed by the image forming apparatus under the condition specified by the condition information and the condition information.
(((16))) The information processing system according to (((15))), wherein the processor is configured to:
   generate the common screen in which both of the result of the diagnosis on the image forming apparatus based on the diagnosis image formed by the image forming apparatus under the condition specified by the condition information and the condition information are described, and in a case where the image forming apparatus forms the diagnosis image a plurality of times by shifting a time, generate the common screen in which the result of the diagnosis for each of the diagnosis images formed the plurality of times and the condition information corresponding to the result of the diagnosis are described.
(((17))) An information processing system comprising:
   a processor configured to:
   acquire condition information that is information on a condition under which an image forming apparatus that forms an image on a recording medium forms a diagnosis image that is an image for diagnosis; and
   in a case where the condition specified by the condition information does not satisfy a predetermined condition, generate information for notifying a notification target person of information indicating that the condition specified by the condition information does not satisfy the predetermined condition as a criterion.
(((18))) A program causing a computer to realize:
   a function of specifying a candidate for an action to be performed on an image forming apparatus that forms an image on a recording medium; and
   a function of generating information for notifying a notification target person of replacement-unrequired action information that is information on a replacement-unrequired action which is an action not accompanied by replacement of a component with higher priority than replacement-required action information which is information on a replacement-required action which is an action accompanied by replacement of the component, among specified candidates for the action.
(((19))) A program causing a computer to realize:
   a function of acquiring condition information that is information on a condition under which an image forming apparatus that forms an image on a recording medium forms a diagnosis image that is an image for diagnosis; and
   a function of generating information for notifying a notification target person of the condition information.
(((20))) A program causing a computer to realize:
   a function of acquiring condition information that is information on a condition under which an image forming apparatus that forms an image on a recording medium forms a diagnosis image that is an image for diagnosis; and
   a function of generating, in a case where the condition specified by the condition information does not satisfy a predetermined condition, information for notifying a notification target person of information indicating that the condition specified by the condition information does not satisfy the predetermined condition as a criterion.

With the information processing system according to (((1))), it is possible to reduce performing an action accompanied by replacement of a component, as compared with a configuration in which the notification target person is notified of only the action accompanied by the replacement of the component as a candidate for an action to be performed on the image forming apparatus.

With the information processing system according to (((2))), it is possible to reduce performing the action accompanied by the replacement of the component, as compared with a case where information for notifying the notification target person of the replacement-required action information before the notification target person is notified of the replacement-unrequired action information is generated.

With the information processing system according to (((3))), it is possible to reduce performing the replacement-required action even though there is a probability that a defect is resolved by the replacement-unrequired action by an operator, as compared with a case where the information for notifying the notification target person of the replacement-required action information before the replacement-unrequired action by the operator is actually performed is generated.

With the information processing system according to (((4))), it is possible to reduce performing the action accompanied by the replacement of the component, as compared with a case where information for causing the display device to display a screen in which both the replacement-unrequired action information and the replacement-required action information are displayed in a manner in which the replacement-required action information is easily recognized by the notification target person than the replacement-unrequired action information is generated.

With the information processing system according to (((5))), it is possible to reduce performing the action accompanied by the replacement of the component, as compared with a case where information for causing the display device to display a screen in which the replacement-unrequired action information is displayed at a lower position than the replacement-required action information is generated.

With the information processing system according to (((6))), it is possible to reduce performing the action accompanied by the replacement of the component, as compared with a case where information for causing the display device to display a screen in which the replacement-unrequired action information is displayed smaller than the replacement-required action information is generated.

With the information processing system according to (((7))), it is possible to check whether or not the replacement-unrequired action is performed after the replacement-required action is actually performed, by referring to the screen.

With the information processing system according to (((8))), a person who refers to this screen can more easily determine a necessity of the replacement-required action, as compared with a case where the information on the necessity of the replacement-required action is not included in the screen.

With the information processing system according to (((9))), the person who refers to this screen can more easily determine the necessity of the replacement-required action, as compared with a case where the information indicating that the replacement-required action is a necessary action is not included in the screen.

With the information processing system according to (((10))), it is possible to reduce performing the action accompanied by the replacement of the component, as compared with a configuration in which the diagnosis is likely to be performed under an incorrect condition without notifying the notification target person of the information on the diagnosis of the image forming apparatus.

With the information processing system according to (((11))), in a case where the condition specified by the condition information does not satisfy the predetermined condition, the notification target person can be notified of the condition information.

With the information processing system according to (((12))), the information indicating that the condition specified by the condition information does not satisfy the predetermined condition as a criterion can be provided to the notification target person.

With the information processing system according to (((13))), the information indicating that the action may not function effectively even though the action is performed on the image forming apparatus can be provided to the notification target person.

With the information processing system according to (((14))), it is possible to notify the notification target person of the predetermined condition.

With the information processing system according to (((15))), it is possible to provide the screen in which a relationship between the result of the diagnosis on the image forming apparatus and the condition information is easily specified, as compared with a case where the result of the diagnosis of the image forming apparatus and the condition information are respectively displayed on separate screens.

With the information processing system according to (((16))), it is possible to provide the screen in which a relationship between the result of the diagnosis result obtained in a case where the image forming apparatus forms the diagnosis image a plurality of times by shifting a time and the condition information corresponding to the result of the diagnosis is easily specified, as compared with a case where the result of the diagnosis of the image forming apparatus and the condition information are respectively displayed on separate screens.

With the information processing system according to (((17))), it is possible to reduce performing the action accompanied by the replacement of the component, as compared with a configuration in which the diagnosis is likely to be performed under an incorrect condition without notifying the notification target person of the information on the diagnosis of the image forming apparatus.

With the program according to (((18))), it is possible to reduce performing an action accompanied by replacement of a component, as compared with a configuration in which the notification target person is notified of only the action accompanied by the replacement of the component as a candidate for an action to be performed on the image forming apparatus.

With the program according to (((19))), it is possible to reduce performing the action accompanied by the replacement of the component, as compared with a configuration in which the diagnosis is likely to be performed under an incorrect condition without notifying the notification target person of the information on the diagnosis of the image forming apparatus.

With the program according to (((20))), it is possible to reduce performing the action accompanied by the replacement of the component, as compared with a configuration in which the diagnosis is likely to be performed under an incorrect condition without notifying the notification target person of the information on the diagnosis of the image forming apparatus.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1: diagnosis system
11a: CPU
100: image forming apparatus
200: server apparatus
250: check information
253: execution information
280: condition information
P: paper

## Claims

1. An information processing system comprising:
a processor configured to:
specify a candidate for an action to be performed on an image forming apparatus that forms an image on a recording medium; and
generate information for notifying a notification target person of replacement-unrequired action information that is information on a replacement-unrequired action which is an action not accompanied by replacement of a component with higher priority than replacement-required action information which is information on a replacement-required action which is an action accompanied by replacement of the component, among specified candidates for the action.

2. The information processing system according to claim 1, wherein the processor is configured to:
generate information for notifying the notification target person of the replacement-required action information after the notification target person is notified of the replacement-unrequired action information.

3. The information processing system according to claim 2, wherein the processor is configured to:
generate information for notifying the notification target person of the replacement-required action information after the notification target person is notified of the replacement-unrequired action information and an operator actually performs the replacement-unrequired action.

4. The information processing system according to claim 1, wherein the processor is configured to:
as the information for notifying the notification target person of the replacement-unrequired action information with higher priority than the replacement-required action information,
generate information for causing a display device to display a screen in which both the replacement-unrequired action information and the replacement-required action information are displayed in a manner in which both the replacement-unrequired action information and the replacement-required action information are displayed and the replacement-unrequired action information is more easily recognized by the notification target person than the replacement-required action information.

5. The information processing system according to claim 4, wherein the processor is configured to:
as the information for causing the display device to display the screen in which both the replacement-unrequired action information and the replacement-required action information are displayed in the manner in which the replacement-unrequired action information is more easily recognized by the notification target person than the replacement-required action information,
generate information for causing the display device to display a screen in which the replacement-unrequired action information is displayed at a higher position than the replacement-required action information.

6. The information processing system according to claim 4, wherein the processor is configured to:
as the information for causing the display device to display the screen in which both the replacement-unrequired action information and the replacement-required action information are displayed in the manner in which the replacement-unrequired action information is more easily recognized by the notification target person than the replacement-required action information,
generate information for causing the display device to display a screen in which the replacement-unrequired action information is displayed larger than the replacement-required action information.

7. The information processing system according to any one of claims 1 to 6, wherein the processor is configured to:
further generate a common screen in which check information indicating whether or not the replacement-unrequired action specified by the replacement-unrequired action information notified to the notification target person is actually performed, and execution information indicating that the replacement-required action specified by the replacement-required action information notified to the notification target person is actually performed are described.

8. The information processing system according to claim 7, wherein the processor is configured to:
further generate the common screen in which information on a necessity of the actually performed replacement-required action is described, in addition to the check information and the execution information.

9. The information processing system according to claim 8, wherein the processor is configured to:
in a case where the replacement-unrequired action specified by the replacement-unrequired action information notified to the notification target person is actually performed and then the replacement-required action specified by the replacement-required action information notified to the notification target person is actually performed, generate the common screen in which information indicating that the replacement-required action is a necessary action is further described, in addition to the check information and the execution information.

10. An information processing system comprising:
a processor configured to:
acquire condition information that is information on a condition under which an image forming apparatus that forms an image on a recording medium forms a diagnosis image that is an image for diagnosis; and
generate information for notifying a notification target person of the condition information.

11. The information processing system according to claim 10, wherein the processor is configured to:
in a case where the condition specified by the condition information does not satisfy a predetermined condition, generate the information for notifying the notification target person of the condition information.

12. The information processing system according to claim 10 or 11, wherein the processor is configured to:
in a case where the condition specified by the condition information does not satisfy a predetermined condition, further generate information for further notifying the notification target person of information indicating that the condition specified by the condition information does not satisfy the predetermined condition based on a criterion.

13. The information processing system according to any one of claims 10 to 12, wherein the processor is configured to:
in a case where the condition specified by the condition information does not satisfy a predetermined condition, further generate information for notifying the notification target person of information indicating that there is a probability that an action, which is specified based on the diagnosis on the image forming apparatus and performed on the image forming apparatus, does not function effectively.

14. The information processing system according to any one of claims 10 to 13, wherein the processor is configured to:
in a case where the condition specified by the condition information does not satisfy a predetermined condition as a criterion, further generate information for notifying the notification target person of information on the predetermined condition.

15. The information processing system according to any one of claims 10 to 14, wherein the processor is configured to:
further generate a common screen including a result of diagnosis on the image forming apparatus based on the diagnosis image formed by the image forming apparatus under the condition specified by the condition information and the condition information.

16. The information processing system according to claim 15, wherein the processor is configured to:
generate the common screen in which both of the result of the diagnosis on the image forming apparatus based on the diagnosis image formed by the image forming apparatus under the condition specified by the condition information and the condition information are described, and in a case where the image forming apparatus forms the diagnosis image a plurality of times by shifting a time, generate the common screen in which the result of the diagnosis for each of the diagnosis images formed the plurality of times and the condition information corresponding to the result of the diagnosis are described.
